# EUROPEAN PATENT SPECIFICATION

(11) **EP 3 275 915 B1**
(45) Date of publication and mention of the grant of the patent: **30.11.2022**
(21) Application number: 16182091.5
(22) Date of filing: 29.07.2016
(51) Int. Cl.: C08G 59/50, C08K 5/49, C08K 5/521, C09J 163/00

(54) **NON-HALOGENEOUS FAST CURING TWO-COMPONENT EPOXY ADHESIVE WITH FLAME RETARDANT PROPERTIES**
NICHTHALOGENER SCHNELLHÄRTENDER ZWEIKOMPONENTIGER EPOXIDKLEBSTOFF MIT FLAMMHEMMENDEN EIGENSCHAFTEN
DURCISSEMENT RAPIDE NON-HALOGÈNE ADHÉSIF ÉPOXY À DEUX COMPOSANTS PRÉSENTANT DES PROPRIÉTÉS IGNIFUGEANTES

(43) Date of publication of application: 31.01.2018
(73) Proprietor: 3M Innovative Properties Company, Saint Paul, MN 55133-3427 (US)
(72) Inventor: Heintz, Carolin, 41464 Neuss (DE); Bardts, Mareike, 40723 Hilden (DE)
(74) Representative: Hettstedt, Stephan

(56) References cited:
- WO-A1-2015/195775
- WO-A2-2013/142751
- US-A1- 2008 166 484
- US-A1- 2011 244 245

## Description

### Field

The disclosure relates to curable two-component epoxy resin compositions, more specifically to the field of epoxy resin based curable adhesive compositions having flame retardant properties. In another aspect, the present disclosure relates to a method for adhesively bonding an article to a substrate by using the two-component resin compositions as described herein. In still a further aspect, the present disclosure relates to the use of such two-component epoxy resin compositions.

### Background

Structural adhesives are adhesive compositions that can bond materials with a mechanical strength comparable to mechanical fasteners. They may be used to replace or augment conventional joining techniques such as welding, brazing or mechanical fasteners, such as nuts and bolts, screws and rivets. In particular, in the transportation and construction industries, structural adhesives can present a lightweight support of or even an alternative to mechanical fasteners.

Epoxy resin based compositions have long been known for their good adhesive and mechanical properties and have been widely used as bonding agents in a variety of applications. Many of these compositions contain latent curatives (for example dicyandiamides, anhydrides or aromatic amines, such as for example diaminodiphenyl sulfone) and require high temperatures for curing the adhesive composition. Such adhesive systems are referred to as "one-component systems". Advantageously, one-component systems may be applied as films which simplifies the adjustment of bond thicknesses. On the other hand, said one-component system may exhibit a limited shelf-life when being stored at room temperature and often require the use of ovens or autoclaves during the curing procedure due to curing taking place at elevated temperatures. Other epoxy adhesive formulations with more reactive curing agents can be cured at lower temperatures. Such systems are referred to as "two-component systems", because at least the majority of the epoxy resins are kept separated from the curing agents to avoid premature cross-linking. The two parts are combined upon application of the adhesive to initiate the curing reaction. These two-component systems may avoid the problem of limited shelf-life and may further be cured at lower temperatures than the one-component systems, e.g. even at room temperature. In many applications of two-component epoxy adhesives, a fast curing time, even at room temperature, is desirable or even mandatory. At the same time, even for curing at room temperature, it is also highly desirable or even mandatory that the adhesive bonds obtained exhibit good mechanical and adhesive strength. In addition, in many typical applications such as in transportation, automotive, aeronautics and aerospace manufacturing industries, mechanical and adhesive strength are required even at elevated temperatures.

In industrial manufacturing operations, in particular in the automotive, transportation, aeronautics and aerospace field, where parts bonded by structural adhesives are often exposed to elevated temperatures and still must exhibit a high degree of mechanical strength, expectations are high towards the adhesives. In particular, it is highly desirable that structural adhesive compositions cure quickly into adhesive bonds which exhibit a high degree of toughness such as commonly known high overlap peel strength and high overlap shear strength, even at elevated temperatures.

Furthermore, in a lot of applications of such structural adhesives, in particular in aerospace and automotive manufacturing industries, strict requirements with regard to flame retardant properties and the emission of smoke and toxic fumes exist. Thus, there are numerous examples in the art where these adhesive composition contain a certain amount, often large amounts, of compounds having flame retardant properties. On the other hand, especially in the field of aerospace, additional requirements regarding the weight of used material exist, which also applies to the adhesives used. A growing interest in light-weight components is observed in the automotive industry. Moreover, adhesives used in a broad range of applications, in particular in the aforementioned industries, need to exhibit good handling properties such as a short work life. Accordingly, an adhesive should exhibit a combination of these properties.

EP 1622976 A1 discloses molding compositions particularly useful in coating electronic devices such as integrated circuits. The molding composition include an epoxy resin, a hardener for the epoxy resin, a flame retardant such as melamine cyanurate, and a quarternary organophosphonium salt for catalysing a reaction between the epoxy resin and the hardener, such as ethyl triphenyl phosphonium acetate. The molding compositions exhibit flame retardancy.

US 2011/244245 A1 describes curable adhesive compositions comprising i. a curable epoxy resin ii. an amine curing agent, iii. a polymeric toughening agent, iv. a filler and v. a phosphoric acid ester comprising a certain residue R as an adhesion promoter, wherein R represents an aliphatic or aromatic residue that contains one or more carboxylic acid ester units and/or one or more urethane units and that further contains at least one ether group and n represents an integer of 1 or 2, methods of making them, bonded articles and methods for bonding.

Furthermore, US 2008/166484 A1 discloses a curable composition that provides fire retardant, self-extinguishing properties for adhesive applications. The curable composition contains a particulate, phosphorous-containing compound, and another compound which is a liquid phosphorous compound or a particulate compound. The cured composition exhibits fire retardancy properties and mechanical strength.

Without contesting the technical advantages associated with the adhesive composition known in the art for bonding parts, there is still a strong need for rapid curing adhesive compositions suitable for use in structural bonding applications, in particular of those having flame retardant and/or good smoke/toxic fumes properties.

Other advantages of the structural adhesives and methods of the present disclosure will be apparent from the following description.

### Summary

The present disclosure provides a curable adhesive precursor, comprising
(a) a first part (A) comprising:
   (i) a first epoxy curing agent comprising at least one polyether amine and having an amine equivalent weight of at least 55 grams per mole of amine equivalents;
   (ii) a second epoxy curing agent distinct from the first epoxy curing agent or a secondary curative;
   (iii) a metal salt catalyst;
   (iv) optionally, a toughening agent; and
(b) a second part (B) comprising:
   (i) a first epoxy resin in an amount in the range of from 30 to 55 wt.-%, based on the total weight of part (B);
   (ii) a second epoxy-based resin distinct from the first epoxy resin in an amount in the range of from 4 to 40 wt.-%, based on the total weight of part (B);
   (iii) at least one phosphorous-based first flame retardant in an amount in the range of from 15 to 30 wt.-%, based on the total weight of part (B);
   (iv) optionally, at least one second flame-retardant distinct from the at least one first flame retardant in an amount in the range of from 5 to 17 wt.-%, based on the total weight of part (B);
   (v) a core-shell polymer toughening agent;
   (vi) optionally, an epoxy-based reactive diluent; and
   (vii) optionally, a filler material;
wherein the total amount of flame retardant is lower than 25 wt.-% of the total curable adhesive precursor.

The present disclosure further provides a method of bonding an article to a substrate, the method comprising the following steps:
(a) Providing a curable adhesive precursor according to the present disclosure,
(b) Combining parts (A) and (B) of the curable adhesive precursor so as to form a curable adhesive composition;
(c) Applying the curable adhesive composition to at least part of the surface of the article and/or the substrate;
(d) Adhesively contacting the article to the substrate via the curable adhesive composition; and
(e) Allowing the curable adhesive composition to cure.

Furthermore, the present disclosure relates to the use of the curable adhesive precursor as described herein for industrial applications, in particular for manufacturing and repairing operations in construction, automotive, aeronautics and aerospace industries.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

Unless explicitly stated otherwise, all embodiments and optional features of the present disclosure can be combined freely.

The first aspect of the present disclosure is a curable adhesive precursor, comprising
(a) a first part (A) comprising:
   (i) a first epoxy curing agent comprising at least one polyether amine and having an amine equivalent weight of at least 55 grams per mole of amine equivalents;
   (ii) a second epoxy curing agent distinct from the first epoxy curing agent or a secondary curative;
   (iii) a metal salt catalyst;
   (iv) optionally, a toughening agent; and
(b) a second part (B) comprising:
   (j) a first epoxy resin in an amount in the range of from 30 to 55 wt.-%, based on the total weight of part (B);
   (ii) a second epoxy-based resin distinct from the first epoxy resin in an amount in the range of from 4 to 40 wt.-%, based on the total weight of part (B);
   (iii) at least one phosphorous-based first flame retardant in an amount in the range of from 15 to 30 wt.-%, based on the total weight of part (B);
   (iv) optionally, at least one second flame-retardant distinct from the at least one first flame retardant in an amount in the range of from 5 to 17 wt.-%, based on the total weight of part (B);
   (v) a core-shell polymer toughening agent;
   (vi) optionally, an epoxy-based reactive diluent; and
   (vii) optionally, a filler material;
wherein the total amount of flame retardant is lower than 25 wt.-% of the total curable adhesive precursor.

Curable precursors as the one according to the present disclosure are also known as 2-component adhesives or 2k-adhesives. It is understood that the first part (A) is physically separated from the second part (B) of the curable adhesive precursor. The first part (A) and second part (B) are mixed before the intended use according to the user's needs so as to obtain a curable adhesive composition. The present disclosure also covers a curable adhesive composition, obtained from the curable adhesive precursor and a cured adhesive obtained from curing the curable adhesive composition. The use of these 2k-adhesives offers several advantages such as a longer shelf-life, the possibility to form a curable composition according to the user's needs, and a readily curable composition which itself offers further handling advantages for the user, in particular in the technical field of manufacturing of parts for the aircraft industries, i.e. fixed-wing aircrafts and rotorcrafts.

The adhesive precursor according to the present invention may exhibit at least one or even a combination of desirable properties such as good handling properties, fast curing times, good mechanical strength of the cured adhesive as well as good flame retardant properties as well as favourable smoke and non-toxic properties and may even exhibit off-white or light color.

In the context of the present disclosure, the terms "room temperature" and "ambient temperature" are used interchangeably and refer to a temperature of 23 °C (± 2 °C) at ambient pressure condition of about 101 kPa.

It has in particular been found that this is due to the specific and unique combination of a part (A) comprising a first epoxy curing agent comprising at least one polyether amine and having an amine equivalent weight of at least 55 grams per mole of amine equivalents, a second epoxy curing agent distinct from the first epoxy curing agent or a secondary curative, a metal salt catalyst, optionally, a toughening agent, and a part (B) comprising a first epoxy resin, a second epoxy distinct from the first epoxy resin, at least one phosphorous-based first flame retardant, optionally, at least one second flame retardant distinct from the first flame retardant, a core-shell polymer toughening agent, optionally, an epoxy-based reactive diluent, and optionally, a filler material, wherein the total amount of flame retardant is lower than 25 wt.-% of the total adhesive precursor.

Epoxy curing agents suitable for use in the present disclosure are compounds which are capable of cross-linking (curing) the epoxy resin. Suitable curing agents according to the present invention may be primary or secondary amines. The epoxy curing agent system present in part (A) may comprise two epoxy curing agents, a first epoxy curing agent and a second epoxy curing agent which is distinct (i.e. chemically different) from the first epoxy curing agent. Alternatively, first part (A) comprises a first epoxy curing agent and a secondary curative.

The first epoxy curing agent for use herein comprises at least one polyether amine and having an amine equivalent weight (AEW) of at least 55 grams per mole of amine equivalents. In that context, the first epoxy curing agent for use herein may be any aliphatic, cycloaliphatic, linear, branched or aromatic polyether amine provided it meets the (AEW) requirement mentioned above.

Without wishing to be bound by theory, it is believed that the first epoxy curing agent comprising at least one polyether amine and having an amine equivalent weight of at least 55 grams per mole of amine equivalents provides fast curing properties to the curable adhesive due its inherent high reactivity, while further providing excellent chemical resistance after curing with the epoxy resin.

In particular aspect, the first epoxy curing agent for use herein may comprise the general structure: 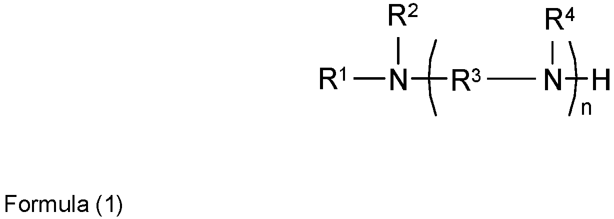 wherein
the residues R¹, R², and R⁴, independently from each other, may represent hydrogen or a hydrocarbon (such as an alkyl) or an alkoxy or a polyoxyalkyl residue containing 1 to 15 carbon atoms;
R³ represents a polyether alkyl residue, preferably containing 1 to 15 carbon atoms;
n represents any integer from 1 to 10.

In a preferred aspect, the residues R¹, R², and R⁴ are chosen such that the amine contains at least one or two primary amine groups.

In a particular aspect, the first epoxy curing agent is a polyether amine having one or two or more primary amine moieties. The polyether amine may have from 1 to 12, or even from 1 to 6 catenary ether (oxygen) atoms.

In a preferred aspect, the first epoxy curing agent comprises at least one polyether amine derived from polypropylene oxide or polyethylene oxide. Exemplary polyether amines suitable for use herein are commercially available under the trade designation JEFFAMINE from Huntsman Chemicals, or TTD (4,7,10-trioxatridecane-1,13-diamine) commercially available, for example, from BASF, Ludwigshafen Germany. In a further preferred aspect, an adduct of the at least one polyether amine derived from polypropylene oxide or polyethylene oxide with an epoxy resin is used as a first epoxy curing agent. For example, an adduct of TTD (in excess) with a commercially available epoxy resin such as Epon 828 may be advantageously used, as long as the adduct has an amine equivalent weight of at least 55 grams per mole of amine equivalents. The adduct of TTD with said epoxy resin may be readily prepared by procedures well-known to the skilled person, e.g. by mixing TTD and epoxy resin and keeping the mixture for about one hour at elevated temperatures such as about 100 °C.

According to a particular aspect of the curable adhesive precursor of the present disclosure, the first epoxy curing agent for use herein comprises at least one polyether amine having an amine equivalent weight of at least 55 grams per mole of amine equivalents, at least 70 grams per mole of amine equivalents, or even at least 100 grams per mole of amine equivalents.

It is preferred that the first epoxy curing agent (i) is contained in an amount in the range of from 45 to 90 wt.-%, preferably in the range of from 50 to 87 wt.-%, more preferably in the range of from 55 to 85 wt.-%, based on the total weight of part (A).

The first part (A) of the curable adhesive precursor as described herein further comprises a second epoxy curing agent distinct from the first epoxy curing agent or a secondary curative. The second epoxy curing agent for use herein is not particularly limited. Any epoxy curing agent commonly known in the art may be used in the context of the present disclosure provided it is chemically different from the first epoxy curing agent. In that context, the second epoxy curing agent for use herein may be any aliphatic, cycloaliphatic, linear, branched or aromatic amine.

Without wishing to be bound by theory, it is believed that the second epoxy curing agent or the secondary curative provide an acceleration effect to the curing reaction and beneficially impacts the ability to cure at room temperature.

In a particular aspect, the second epoxy curing agent for use herein may have the general structure: 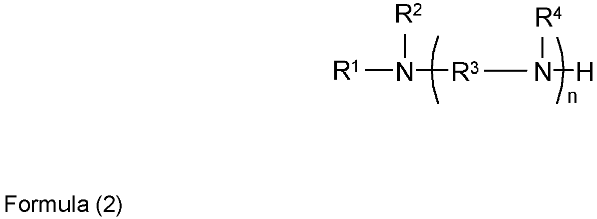 wherein
the residues R¹, R², and R⁴, independently from each other, may represent hydrogen or a hydrocarbon (such as an alkyl) or an alkoxy or a polyoxyalkyl residue containing 1 to 15 carbon atoms;
R³ represents a hydrocarbon, an alkylether or a polyether alkyl residue, preferably containing 1 to 15 carbon atoms;
n represents any integer from 1 to 10.

In a particular aspect, the residues R¹, R², and R⁴ are chosen such that the amine contains at least one or two primary amine groups. If R³ is polyether alkyl, then the first epoxy-based resin cannot have formula (I).

According to a particular advantageous aspect of the present disclosure, part (B) of the curable adhesive composition comprises a secondary curative. Preferably, the secondary curativeis selected form the group consisting of imidazoles, imidazole-salts, imidazolines or aromatic tertiary amines including those having the structure of formula (3): 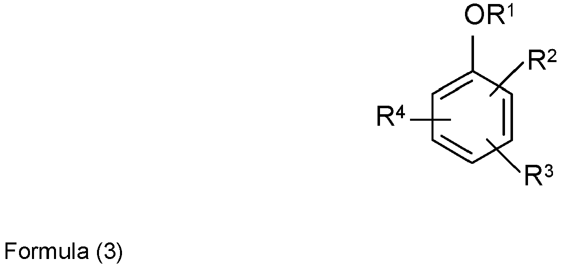 wherein
R¹ is H or alkyl, such as, e.g., methyl or ethyl, preferably methyl;
R² is CH₂NR⁵R⁶;
R³ and R⁴ may be, independently from each other, present or absent and when present R³ and R⁴ are CH₂NR⁵R⁶;
R⁵ and R⁶ are, independent from each other, alkyl, preferably CH₃ or CH₂CH₃.

Exemplary secondary curatives for use herein according to formula (3) include tris-2,4,6-(dimethylaminomethyl)phenol commercially available under the trade designation ANCAMINE K54 from Air Products and Chemicals Inc.

According to a particular aspect of the precursor composition of the present disclosure, the second epoxy curing agent for use herein has an amine equivalent weight of at least 50 grams per mole of amine equivalents, at least 100 grams per mole of amine equivalents, at least 150 grams per mole of amine equivalents, at least 200 grams per mole of amine equivalents, or even at least 250 grams per mole of amine equivalents.

Preferably, the second epoxy curing agent or the secondary curative are contained in said curable adhesive precursor in an amount in the range of from 5 to 30 wt.-%, preferably in the range of from 6.5 to 25 wt.-%, more preferably in the range of from 8 to 20 wt.-%, based on the total weight of part (A).

It is further preferred that the ratio of the first epoxy curing agent (i) and the second epoxy curing agent (ii) is in the range of from 10:1 to 1:10, preferably in the range of from 10:1 to 1:1, more preferably in the range of from 10:1 to 4:1.

The first part (A) of the curable adhesive precursor according to the present disclosure further comprises metal salt catalyst. This may have the effect of an increased curing speed, which is very advantageous in many applications, e.g. in adhesively connecting parts in the aircraft or automotive manufacturing industry. Without wishing to be bound by theory, it is believed that the metal nitrate catalyst provides further acceleration effect to the curing reaction and forms a reactive complex with the second epoxy curing agent beneficially impacting the thixotropic properties of the curable adhesive composition. Accordingly, curing at ambient temperature, together with good mechanical strength of the bond obtained may be achieved.

Preferably, the metal in the metal salt catalyst is selected from the group consisting of alkali, earth alkali, rare earth metals, aluminium, preferably from alkali and earth alkali, more preferably from earth alkali, even more preferably from calcium, caesium, strontium, and magnesium. The anion is preferably selected from nitrate, nitrite and organic acid anion, preferably sulfates and triflates, more preferably triflates, of which nitrates and triflates are particularly preferred. Nitrates are strongly preferred. It was found that the combination of the secondary curative and the metal salt catalyst gives rise to an increase in curing speed. In this regard, metal salt catalyst selected from the group consisting of calcium nitrate, calcium triflate, aluminium nitrate, magnesium nitrate, lithium nitrate, lanthanum nitrate, and any combinations thereof is preferred. The use of calcium nitrate, magnesium nitrate, calcium triflate, and any combinations thereof is particularly preferred. Without wanting to being bound to theory, it is believed that the metal salt catalyst thickens the material and therefore influences the viscosity of the part (A) of said curable adhesive precursor in a positive way. For example, it is highly advantageous and therefore preferred that the secondary curative is tris-(dimethylaminomethyl) phenol and the metal salt catalyst is calcium nitrate, magnesium nitrate, calcium triflate and any combinations thereof, preferably calcium nitrate.

It is further preferred that the metal salt catalyst (iii) is contained in an amount in the range of from 5 to 15 wt.-%, preferably in the range of from 6 and 13 wt.-%, more preferably in the range of from 7 and 11 wt.-% based on the total weight of part (A).

In addition, it is preferred that the first part (A) of the curable adhesive precursor described herein comprises a toughening agent. This may have the effect of improving the mechanical behaviour of the cured material at low temperatures. In particular, a certain brittleness of the cured material at low temperatures may be avoided. Exemplary compounds which may be advantageously used as said toughener are carboxyl-, amine-, epoxy-, hydroxyl- or methacrylate-terminated butadiene, butadiene styrene or butadiene acrylonitrile copolymers, preferably amine terminated butadiene styrene or butadiene acrylonitrile copolymers. Such tougheners are commercially available, for example, under the trade designations Hypro CTBN, ATBN, ETBN, HTB or VTBNX from CVC Thermoset Specialities and Hycar ATBN from Amerald Materials. In this regard, it is preferred that the first part (A) comprises said toughening agent (iv) in amount in the range of from 1 and 30 wt.-%, more preferably in the range of from 2 to 25 wt.-% based on the total weight of first part (A).

The second part (B) of the curable adhesive precursor according to the present disclosure comprises a first epoxy resin and a second epoxy resin. Suitable epoxy resins for use herein will be easily identified by those skilled in the art, in the light of the present description.

The epoxy resin for use herein is not particularly limited. Epoxy resins are polymers having one or more epoxy-functionality. Typically but not exclusively, the polymers contain repeating units derived from monomers having an epoxy-functionality but epoxy resins can also include, for example, silicone-based polymers that contain epoxy groups or organic polymer particles coated with or modified with epoxy groups or particles coated with, dispersed in, or modified with epoxy-groups-containing polymers. The epoxy-functionalities allow the resin to undertake cross-linking reactions. The epoxy resins may have an average epoxy-functionality of at least 1, greater than one, or of at least 2.

Any epoxy resins well known to those skilled in the art may be used in the context of the present disclosure. Epoxy resins may be aromatic, aliphatic, cycloaliphatic or mixtures thereof. In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane,dihydroxydiphenyldimethylmethane, dihydroxydiphenylethylme thylmethane, dihydroxydiphenylmethylpropylmethane, dihydroxydiphenylethylphenyl-methane,dihydroxydiphenylpropylenphenylmethane, dihydroxydiphenylbutylphenyl-methane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by formula (4) wherein n denotes the repeating unit (in case of n= 0 formula (4) represents the diglycidyl ether of bisphenol A):

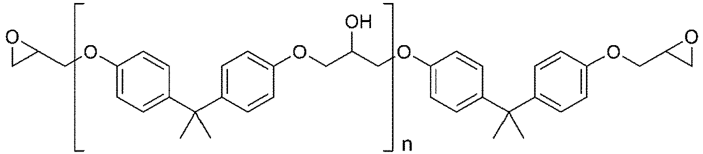

Typically, the epoxy resins are blends of several resins. Accordingly, n in formula (4) may represent an average value of the blend, and may not be an integer but may include values like, for example and not limited thereto, 0.1 to 2.5.

Instead of, or in addition to, using the aromatic epoxy resins described above also their fully or partially hydrogenated derivatives (i.e. the corresponding cycloaliphatic compounds) may be used. Instead of, or in addition to using aromatic epoxy resins also aliphatic, for example acyclic, linear or branched, epoxy resins may be used.

Typically, the epoxy resin is liquid. The epoxy resins may include solid epoxy resins, used in dissolved form, or dispersed, for example in another liquid resin. Preferably, the epoxy resin is liquid at ambient conditions (23°C, 1 bar). The epoxy resins may contain halogens, preferably bromine atoms to make them less flammable.

Examples of suitable and commercially available epoxy resins include diglycidylether of bisphenol A (available under the trade designation EPON 828, EPON 830, EPON 1001 or EPIKOTE 828 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA). Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.). Cycloaliphatic epoxy resins are commercially available under the trade designation EPINOX (Hexion Specialty Chemicals GmbH).

The second epoxy resin is distinct from the first epoxy resin, i.e. chemically different. The chemical difference to the first epoxy resins may give rise to further differences to the first epoxy resins. In particular, it is preferred that the second epoxy resin has a lower viscosity than the first epoxy resin. With regard to the viscosity of epoxy resins as used herein, the viscosity is to be determined according to ASTM D 445. In this regard, it is preferred that the second epoxy resin has a viscosity according to ASTM D 445 of less than 20 Pa·s, preferably less than 15 Pa·s, more preferably less than 10 Pa·s. Furthermore, it is preferred that the second epoxy-based resin (ii) exhibits an epoxy equivalent weight according to ASTM D1652 in the range of from 120 to 450 g/eql, preferably in the range of from 150 to 430 g/eq, more preferably in the range of from 170 to 410 g/eq. The use of two distinct epoxy resins, in particular with two different viscosities and/or epoxy equivalents as described above may have the effect of an improved mechanical behaviour of the cured material at higher temperatures, and this may be achieved without adding brittleness to the system.

For example, the first epoxy resin may be based on an bisphenol A diglycidylether having an epoxy equivalent of 185-192 g/mol and the second epoxy resin may be a blend of a bisphenol A resin based on bisphenol A and epichlorhydrin and a bisphenol F resin based on bisphenol F and epichlorhydrin having an epoxy equivalent weight in the range of from 200 to 400 g/mol, e.g. 210 to 220 g/mol or 310 to 390 g/mol. In a particular embodiment, the first epoxy resin may be based on a bisphenol A diglycidylether having an epoxy equivalent of 185-192 g/eq and a viscosity of 110-150 Pas and the second epoxy resin may be based on a modified bisphenol A resin having an equivalent weight in the range of 310-390 g/eq and a viscosity of 0.7-1.4 Pas. In another particular embodiment, the first epoxy resin may be based on a bisphenol A diglycidylether having an epoxy equivalent of 185-192 g/eq and a viscosity of 110-150 Pas and the second epoxy resin may be based on a cycloaliphatic epoxy resin having an epoxy equivalent of 210-220 g/mol and a viscosity of 1.8-2.5 Pas.

It is also preferred that the at least one second epoxy resin is a multifunctional epoxy resin such as a trifunctional epoxy resin. This may be a single epoxy resin or may also be a combination of two or more epoxy resins. In a preferred embodiment, the equivalent weight of the trifunctional or higher epoxy is approximately 60 or higher, or approximately 70 or higher, or approximately 80 or higher from the perspective of ease of procurement and reaction properties, and is approximately 1000 or lower, or approximately 500 or lower, or approximately 300 or lower from the perspective of the heat resistance of the cured epoxy adhesive.

Preferred examples of trifunctional epoxy resins used herein include glycidyl amine type epoxy resins, glycidyl phenol type epoxy resins, and the like. Examples of glycidyl amine type epoxy resins include triglycidyl aminophenol epoxy compounds, triglycidyl aminocresol epoxy compounds. Examples of glycidyl phenol type epoxy resins include phenol novolac epoxy compounds, triphenyl methane triglycidyl ether compounds, and the like.

Preferable examples of the triglycidyl aminophenol epoxy compounds include triglycidyl p-aminophenol expressed by the following general formula (5): 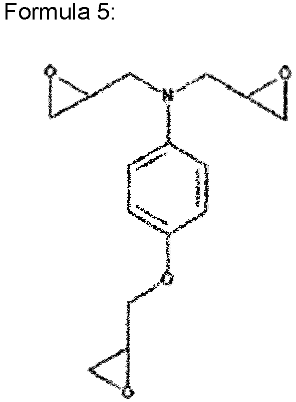 and triglycidyl m-aminophenol expressed by the following general formula (6):

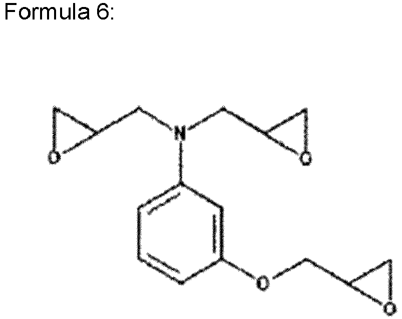

Preferable examples of the triglycidyl aminocresol epoxy compounds include triglycidyl aminocresol expressed by the following formula (7).

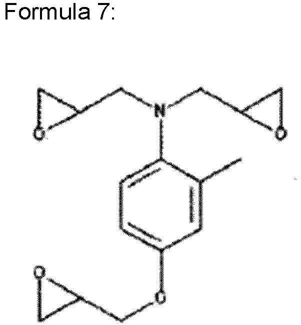

Preferable examples of the triphenyl methane triglycidyl ether compounds include triphenyl methane triglycidyl ether expressed by the following formula (8).

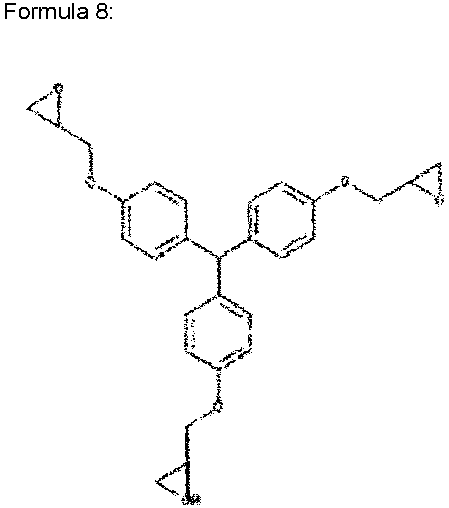

Preferable examples of the tetraglycidyl diaminodiphenyl methane epoxy compounds include the tetraglycidyl diaminodiphenyl methane (4,4'-methylene bis[N,N-bis(oxiranylmethyl) aniline]) expressed by the following formula (9).

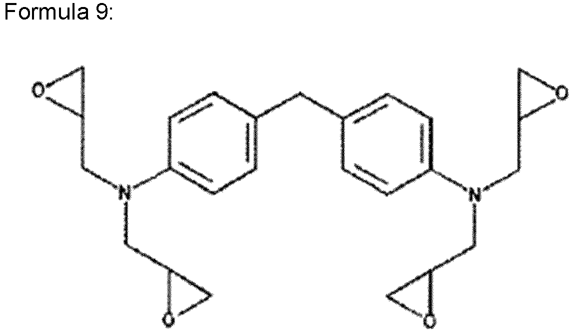

Preferable examples of the tetraglycidyl meta-xylylenediamine epoxy compounds include tetraglycidyl meta-xylylenediamine expressed by the following formula (10).

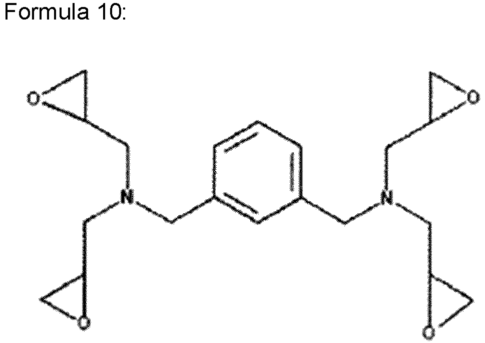

Preferable examples of the tetraglycidyl bisamino methyl cyclohexane epoxy compounds include tetraglycidyl bisamino methyl cyclohexane expressed by the following formula (11).

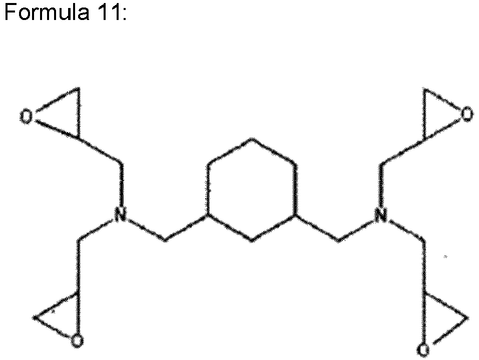

Preferable examples of the tetraglycidyl glycoluril epoxy compounds include tetraglycidyl glycoluril expressed by the following formula (12).

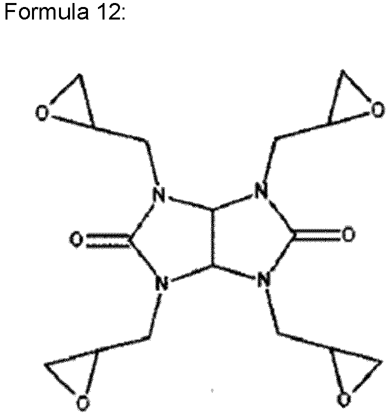

Furthermore, preferable examples of the phenol novolac epoxy compounds include the compounds expressed by the following formula (13): 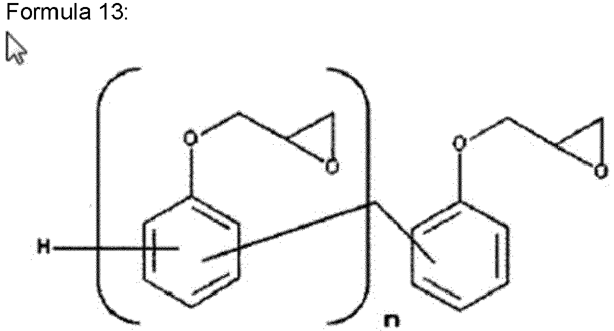 (where n is 2 or higher).

Epoxy resins which may be employed as second epoxy resins as described herein are commercially available under the trade designations TACTIX and ARALDITE from Huntsman. It is also preferred that at least one of the at least one second epoxy resin is selected from the group commonly known to the skilled person as novolac epoxy resins. For example, well-known Novolac compounds are ortho-ortho, ortho-para and para-para methylene bridged phenolic compounds. Examples are the reaction products of phenol and formaldehyde. Novolac epoxy resins may be obtained, e.g. from the reaction of epichlorhydrin and said phenol-formaldehyde novolac compounds. Novolac epoxy compounds generally have multi-epoxy functionalities of greater than 1, greater than 2, or even greater than 3 as defined above. Epoxy novolac resins as described herein may be liquid or semi-solid. Examples of suitable and commercially available novolac epoxy resins are the novolac epoxy resins available from Dow Chemicals, e.g. under the trade designation D.E.N.

Using the combination of first and second epoxy resins as described herein may give rise to particularly desirable combination of properties of the cured composition such as high mechanical strengths and favourable adhesive properties such as high overlap shear strength and high peel strength, even at elevated temperatures.

With regard to the respective amounts, the first epoxy resin is contained in an amount in the range of from 30 to 55 wt.-% based on the total weight of part (B) of the curable adhesive precursor. The second epoxy resin is contained in an amount in the range of from 4 to 40 wt.-%, preferably in the range of from 6 to 35 wt.-%, based on the total weight of part (B) of the curable adhesive precursor.

An important requirement for adhesives intended for use in aircrafts or vehicles such as cars or train is to exhibit at least in a certain way flame-retardant properties. There are numerous examples of industry standards and requirements to this respect. In addition, according to further requirements, adhesives should not or even must not emit smoke and/or toxic fumes when being heated above certain temperatures or when being burned. Moreover, adhesive compositions should also be REACH compliant. Accordingly, part (B) of the curable adhesive precursor according to the present disclosure comprises at least one phosphorous-based first flame retardant and, optionally, at least one second flame retardant distinct from the at least one first flame retardant. However, an adhesive also has to provide certain handling properties such as a certain viscosity and additionally provide mechanical stability after being cured, even at elevated or low temperatures. All these single desired features of the composition or cured material may lead to contradicting requirements for the adhesive composition. For example, good fire retardant properties may require a high amount of fire retardant compounds in the adhesive composition which on the other hand may have a negative impact on the handling properties such as viscosity of the adhesive composition and/or the mechanical properties of the cured material. Due to the selection of compounds in combination with a total amount of said flame retardant of lower than 25 wt.-% of the total curable adhesive precursor, a desirable combination of properties with regard to handling properties, flame retardant properties of the curable adhesive precursor and curable adhesive composition obtained therefrom as well as mechanical properties of the cured material may be achieved.

With regard to the at least one phosphorous-based first flame retardant, it was found that red phosphorous containing compounds and organophosphorous compounds provided the best results, i.e. the combination of desirable flame-retardant, handling and mechanical properties outlined above when used in the amounts described herein. Thus, it is preferred that said phosphorous-based flame retardant is selected from red phosphorous containing compounds and organophosphorous compounds, and mixtures thereof.

In particular, it is preferred that the at least one phosphorous-based first flame retardant is selected from a red phosphorous containing compound, preferably red phosphorous powder, optionally in the form of a blend of a stabilised micro encapsulated red phosphorous in an epoxy resin carrier, and organophosphorous compounds, preferably selected from organophosphates, (preferably triphenyl phosphate, resorcinol bis(diphenylphosphate), bisphenol A diphenylphosphate, tricresyl phosphate,), organophosphonates (preferably dimethyl(methylphosphonate), and phosphinates (preferably metal phosphinates, preferably metal selected from aluminium, iron, kalium, calcium, sodium, preferably phosphinates selected from diethyl phosphinate, dimethylphosphinate, dipropylphosphinate, dibutylphosphinate, diphenylphosphinate), (preferably aluminium diethylphosphinate).

For certain applications, it is desirable that the adhesive composition and/or the cured adhesive composition (or "cured material) exhibit an off-white or near-white appearance or color. In these cases, it is preferred that the phosphorous flame-retardant is an organophosphorous compound, preferably selected from organophosphates, (preferably triphenyl phosphate, resorcinol bis(diphenylphosphate), bisphenol A diphenylphosphate, tricresyl phosphate,), organophosphonates (preferably dimethyl(methylphosphonate), and phosphinates (preferably metal phosphinates, preferably metal selected from aluminium, iron, kalium, calcium, sodium, preferably phosphinates selected from diethyl phosphinate, dimethylphosphinate, dipropylphosphinate, dibutylphosphinate, diphenylphosphinate), (preferably aluminium diethylphosphinate). An example for a commercially available organic phosphinate which can be advantageously used within the present disclosure is Exolite OP 1230.

In a particular aspect of the present disclosure part (B) of the adhesive precursor as described herein further comprises at least one second flame retardant distinct from the at least one first flame retardant. This may have the effect of even enhanced flame retardant properties while maintaining fast curing properties as well as mechanical strength such as high overlap shear strength and/or peel strength, even at elevated temperatures. As second flame retardant, any flame retardant known in the art may be used. Preferably, the at least one second flame retardant comprises a non-phosphorous material, preferably selected from a carbon-containing expandable material, organohalogens, metal hydroxides, preferably aluminium hydroxide and magnesium hydroxide, huntite, hydromagnesite and borates. It is further preferred that the expandable carbon-containing material, preferably an expandable carbonic material, is an expandable graphite intercalation compound, preferably a thermally expandable graphite intercalation compound such as expandable graphite. The incorporation of these compounds may have the effect of improved fire retardant properties and advantageous minimisation of the creation of toxic gases and fuses in the case of fire Preferably, the second flame retardant is an expandable carbon-containing material, preferably an expandable carbonic material, and the first flame retardant is red phosphorous.

Graphite intercalation compounds are compounds in which organic compounds are inserted into the graphene planes of the graphene planes structure of graphite. Graphite intercalation compounds are also known under the designation expandable graphite and may be manufactured by treating graphite, such as natural graphite flake, with an intercalant of, e.g. a solution of sulfuric acid and nitric acid. The crystal structure of the graphite reacts to form a compound of graphite and the intercalant. Common methods for manufacturing particles of expandable graphite or graphite intercalation compounds are described, *inter alia*, in U.S. Pat. No. 3,404,061 and CA 2 334 274 A1. It is known that upon exposure to high temperatures, the expandable graphite expands in dimension as much as 80 or more times of their original volume in an accordion-like fashion in a direction perpendicular to the crystalline planes of the graphite. Exfoliated graphite particles may be vermiform in appearance, and are therefore commonly referred to as "worms". Without wanting to being bound by theory, it is assumed that said "worms" of expanded expandable graphite may act as a barrier to fire, both mechanically and because of their insulating properties. Examples of graphite intercalation compounds (i.e. expandable graphite) which may be advantageously used in the present disclosure are commercially available under the designations ES 100 C10, ES 250 B5 and ES 350 F5 from Graphit Kropfmühl/AMG Mining AG or Expand C.

With regard to the mechanical properties of the cured adhesives while maintaining good flame retardant properties, it is preferred that the total amount of flame retardant is lower than 25 wt.-%, preferably lower than 22.5 wt.-%, more preferably lower than 20 wt.-% of the total weight of the curable adhesive precursor.

For the same reason, the at least one phosphorous-based first flame retardant is contained in an amount in the range of from 15 to 30 wt.-%, based on the total weight of part (B) of the adhesive precursor. Similarly, it is preferred that the at least one second flame retardant distinct from the at least one first flame retardant is contained in an amount in the range of from 5 to 17 wt.-%, based on the total weight of part (B) of the adhesive precursor.

The precursor composition according to the present disclosure comprises in its part (B) a core-shell polymer toughening agent. The core-shell polymer toughening agent for use herein is not particularly limited. Any core-shell polymer toughening agent commonly known in the art may be used in the context of the present disclosure.

In a typical embodiment, the core-shell toughening agent (B) is a composite material configured by materials where the core portion on the inside and the shell portion on the outside are mutually different. Herein, the term "different materials" refers to materials where the composition and/or properties are mutually different, and therefore includes materials where the same type of resins are used but the molecular weights are mutually different, and the like.

From the perspective of favorably achieving a toughening effect on the epoxy adhesive, the Tg of the shell portion is preferably higher than the Tg of the core portion. In this case, while flexibility is provided to the cured epoxy adhesive because the core portion which has a relatively low Tg functions as a centralized point of stress, the shell portion suppresses unwanted agglomeration of the core-shell toughening agent, and thus the core-shell toughening agent can be uniformly dispersed in the epoxy adhesive.

In the exemplified embodiment, the materials of the core portion and the shell portion can be selected such that the Tg of the core portion is approximately -110°C or higher to approximately -30°C or lower, and the Tg of the shell portion is approximately 0°C or higher to approximately 200°C or lower. In the present disclosure, the Tg of the core portion material and shell portion material is defined as the peak temperature of tanδ during dynamic viscoelasticity measurements.

The core-shell toughening agent can be a conjugate diene such as butadiene, isoprene, 1,3-pentadiene, cyclopentadiene, dicyclopentadiene, or the like, or a nonconjugate diene polymer such as 1,4-hexadiene, ethylidene norbornene, or the like; copolymers of these conjugate or nonconjugate dienes with an aromatic vinyl compound such as styrene, vinyl toluene, α-methyl styrene, and the like, or with an unsaturated nitrile compound such as acrylonitrile, methacrylonitrile, or the like, or with a (meth)acrylate such as 2-hydroxyethyl acrylate, 2-hydroxyethyl methacrylate, 3-hydroxybutyl acrylate, glycidyl methacrylate, butoxyethyl methacrylate, and the like; acrylic rubber such as polybutyl acrylate and the like; silicone rubber; or a core-shell graft copolymer having a core part that includes a rubber component such as an IPN composite rubber containing silicone and a polyalkyl acrylate, and a shell component formed by copolymerizing a (meth)acrylate ester around the core part. Polybutadiene, a butadiene - styrene copolymer, or an acrylic butadiene rubber - styrene copolymer can be advantageously used as the core portion, and a material formed by graft-copolymerizing methyl (meth)acrylate can be advantageously used as the shell portion. The shell portion can be laminar, or the shell portion can be configured from one layer or a plurality of layers.

Examples of the core-shell toughening agent include methyl methacrylate - butadiene copolymer, methyl methacrylate - butadiene - styrene copolymer, methyl methacrylate - acrylonitrile - butadiene - styrene copolymer, methyl methacrylate - acrylic rubber copolymer, methyl methacrylate - acrylic rubber - styrene copolymer, methyl methacrylate - acrylic butadiene rubber copolymer, methyl methacrylate - acrylic butadiene rubber - styrene copolymer, methyl methacrylate - (acrylic silicone IPN rubber) copolymer, and the like, but are not restricted thereto. Methyl methacrylate - butadiene copolymer, methyl methacrylate - butadiene - styrene copolymer, and methyl methacrylate - acrylic butadiene rubber - styrene copolymer can be advantageously used as the core-shell toughening agent.

The core-shell toughening agent is normally in the form of fine particles, and the average value (weight average particle diameter) of the primary particle diameter thereof is generally approximately 0.05 µm or higher or approximately 0.1 µm or higher to approximately 5 µm or lower or approximately 1 µm or lower.

In a preferred embodiment, the core-shell toughening agent can be used in a state dispersed in a matrix. It is preferred that the matrix is an epoxy adhesive. A matrix with favorable affinity to either first or second epoxy resin as described herein is particularly preferable from the perspective of favorable dispersion of the core-shell toughening agent in the epoxy adhesive. Examples of the matrix can include epoxy resins (such as bisphenol A and the like).

The core-shell toughening agent can be a commercial product that is provided as a resin modifying agent or the like, and examples include BTA 751 (commercially available from Dow Chemical) as a methyl methacrylate-butadiene-styrene (MBS) type core-shell resin, MX-153 (commercially available from Kaneka) as a resin where methyl methacrylate-butadiene-styrene (MBS) dispersed in bisphenol A diglycidyl ether), and MC-257 (commercially available from Kaneka) as a butadiene core-shell resin,dispersed in epoxy, and F351 (commercially available from Aika Industries) as the acrylic core-shell resin, Paraloid 2650A (butadiene rubber), Hycar ATBN (CVC Chemicals, liquid butadiene rubber), and the like.

Without wishing to be bound by theory, it is believed that the core-shell polymer toughening agent beneficially impacts, in particular, the low temperature adhesion properties and impact resistance of the curable adhesive composition.

According to a particular aspect of the present disclosure, the core-shell polymer toughening agent for use herein is selected from the group of butadiene based core shell particles. In a preferred aspect of the present disclosure, the core-shell polymer toughening agent may be used in liquid medium, preferably a liquid epoxy resin matrix. For example, a suitable core-shell polymer toughening agent already mixed with a liquid epoxy resin matrix is commercially available under the trade designation Kane Ace from Kaneka.

Preferably, the core-shell polymer toughening agent is contained in part (B) in an amount in the range of from 1 to 15 wt.-%, preferably in the range of from 2 to 10 wt.-% based on the total weight of part (B) of the curable adhesive precursor.

It is further preferred that part (B) of the curable adhesive precursor according to the present disclosure comprises an epoxy-based reactive diluent. Reactive diluents are epoxy-containing molecules. The epoxy-based reactive diluent for use herein is not particularly limited. Any epoxy-based reactive diluent commonly known in the art may be used in the context of the present disclosure.

Without wishing to be bound by theory, it is believed that the epoxy-based reactive diluent beneficially impacts, in particular, the extrudability characteristics of the curable adhesive composition.

In a particular aspect of the present disclosure, wherein the epoxy-based reactive diluent for use herein has a saturated or unsaturated cyclic backbone, and preferably comprises glycidyl ether as reactive terminal end portions.

According to a preferred aspect, the epoxy-based reactive diluent for use herein is selected from the group consisting of diglycidyl ether of resorcinol, diglycidyl ether of cyclohexane dimethanol, diglycidyl ether of neopentyl glycol, triglycidyl ether of trimethylolpropane, and any mixtures thereof.

Commercially available reactive diluents for use herein include for example "Reactive Diluent 107" (available from Hexion) and the "Epodil" series (available from Air Products and Chemical Inc, Allentown, PA, USA) including in particular EPODIL 746, EPODIL 747, EPODIL 748 and EPODIL 757.

When used, preferably, the epoxy-based reactive diluent (v) is contained in said part (B) of the curable adhesive precursor as described herein in an amount in the range of from 1 and 25 wt.-%, preferably in the range of from 4 to 20 wt.-%, more preferably in the range of from 6 to 20 wt.-% based on the total weight of part (B) of the curable adhesive precursor.

It is further preferred that the curable adhesive precursor further comprises a filler material. Generally, the filler material for use herein is not particularly limited. That is, the filler material may be organic and/or anorganic, which includes anorganic particles in an organic matrix and vice versa, or a mixture of anorganic and organic materials such as mixtures of particles, liquids, and mixtures of particles dispersed in liquids. Filler materials may have the effect of advantageously effecting the viscosity and thixotropy of the curable adhesive precursor and the curable adhesive composition obtained therefrom as described herein.

In particular, it is preferred that the filler material (vi) in part (B) comprises silica particles. Preferably, the silica particles comprise fumed silica, preferably hydrophobically fumed silica, fused silica, amorphous silica particles, hollow silica particles, silica gels, calcium silicates, and any combinations thereof. Exemplary commercial fillers include SHIELDEX AC5 (a synthetic amorphous silica, calcium hydroxide mixture available from W.R. Grace in Columbia, MD, USA); CAB-O-SIL TS 720 (a hydrophobic fumed silica-treated with polydimethyl-siloxane-polymer available from Cabot GmbH in Hanau, Germany); AEROSIL VP-R-2935 (a hydrophobically fumed silica available from Degussa in Düsseldorf, Germany); AEROSIL R-202 (a hydrophobically fumed silica available from Evonik Industries, Germany); glass-beads class IV (250-300 microns): Micro-billes de verre 180/300 (available from CVP S.A. in France); glass bubbles K37 : amorphous silica (available from 3M Deutschland GmbH in Neuss, Germany); MINSIL SF 20 (available from Minco Inc., 510 Midway, Tennessee, USA); amorphous, fused silica; and APYRAL 24 ESF (epoxysilane-functionalized (2 wt.-%) aluminium trihydrate available from Nabaltec GmbH in Schwandorf, Germany). Fused silica is available, for example, under the trade designation MINSIL from Minco Inc., Midway, USA. Hollow glass microspheres are available under the trade designation MICROBUBBLES from 3M Company, St. Paul, MN, USA.

It is preferred that the filler material (vi) in part (B) is contained in an amount in the range of from 0.1 to 25 wt.-%, preferably in the range of from 1 to 20 wt.-%, more preferably in the range of from 1 to 18 wt.-% based on the total weight of part (B) of the curable adhesive precursor.

Preferably, the curable precursor composition according to the present disclosure comprises
(a) a first part (A) comprising:
   (i) 45 to 95 wt.-%, preferably in the range of from 50 to 90 wt.-%, more preferably in the range of from 55 to 85 wt.-%, based on the total weight of part (A) of a first epoxy curing agent comprising at least one polyether amine and having an amine equivalent weight of at least 55 grams per mole of amine equivalents;
   (ii) 5 to 30 wt.-%, preferably in the range of from 6.5 to 25 wt.-%, more preferably in the range of from 8 to 20 wt.-%, based on the total weight of part (A) of a second epoxy curing agent distinct from the first epoxy curing agent or of a secondary curative;
   (iii) 5 to 15 wt.-%, preferably in the range of from 6 and 13 wt.-%, more preferably in the range of from 7 and 11 wt.-% based on the total weight of part (A) of a metal salt catalyst; and
   (iv) optionally, 1 and 30 wt.-%, more preferably in the range of from 2 to 25 wt.-% based on the total weight of first part (A) of a toughening agent, (preferably a butadiene type toughening agent);
(b) a second part (B) comprising:
   (i) 30 to 55 wt.-% based on the total weight of part (B) of a first epoxy resin
   (ii) 4 to 40 wt.-%, preferably in the range of from 6 to 35 wt.-%, based on the total weight of part (B) of a second epoxy-based resin distinct from the first epoxy resin;
   (iii) 15 to 30 wt.-%, based on the total weight of part (B) of the curable adhesive precursor of at least one phosphorous-based first flame retardant;
   (iv) optionally, 5 to 17 wt.-% based on the total weight of part (B) of the adhesive precursor of at least one second flame retardant distinct from the at least one first flame retardant;
   (v) 1 to 15 wt.-%, preferably in the range of from 2 to 10 wt.-% based on the total weight of part (B) of a core-shell polymer toughening agent;
   (vi) optionally, 1 to 25 wt.-%, preferably in the range of from 4 to 20 wt.-%, more preferably in the range of from 6 to 20 wt.-% based on the total weight of part (B) of an epoxy-based reactive diluent; and
   (vii) optionally, 0.1 to 10 wt.-%, preferably in the range of from 0.5 to 5 wt.-%, more preferably in the range of from 1 to 3 wt.-% based on the total weight of part (B) of a filler material;
wherein the total amount of the flame retardant system is lower than 25 wt.-% of the total curable adhesive precursor.

The ratio between part (A) and part (B) of the curable adhesive composition precursor according to the present disclosure is comprised in the range of from 10:1 to 1:15, preferably between 5:1 to 1:10 and more preferably between 2:1 to 1: 5, even more preferably between 1:1.2 to 1:5.

A further object of the present disclosure is a curable composition, obtained from combining part (A) and part (B) of the curable adhesive precursor as described herein. As already described, the curable composition may confer desirable properties such as high cure speed, and, once cured, good flame retardant properties in combination with low toxic smoke and fume emission, and may further provide good mechanical properties such as strong bonding and mechanical strength.

Accordingly, it is preferred that the adhesive composition according to the present disclosure provides an adhesive composition which provides after curing (preferably at room temperature) an overlap shear strength at room temperature according to EN 2243-1 of at least 15 MPa, preferably of at least 17 MPa, more preferably of at least 19 MPa. It is further preferred that the adhesive composition provides after curing an overlap shear strength at 85 °C according to EN 2243-1 of at least 2 MPa, preferably of at least 2.5 MPa, more preferably of at least 2.7 MPa, even more preferably of at least 2.9 MPa. Furthermore, it is preferred that the adhesive composition provides after curing a peel strength according to EN 2243-2 of at least 50 N/25 mm, preferably of at least 55 N/25 mm, more preferably of at least 60 N/25 mm.

The curable adhesive precursor according to the present disclosure may easily be stored, shipped, and applied as desired by the user via an application kit, comprising part (A) and part (B) of said curable adhesive precursor in separate containers. Thus, the present disclosure further provides an application kit, comprising (a) part (A) of the curable adhesive precursor according to the present disclosure contained in a first container, (b) part (B) of the curable adhesive precursor according to the present disclosure contained in a second container, (c) a first portion where at least portions of part (A) and part (B) of said curable adhesive precursor can be mixed, and a second portion by which the combined parts (A) and (B) are applied onto a surface of a substrate.

In another aspect, the present disclosure relates to a method of bonding an article to a substrate, wherein the method comprises the step of:
a) providing a precursor composition for a curable adhesive as described above;
b) combining part (A) and part (B) so as to form a curable adhesive composition;
c) applying the curable adhesive composition to at least part of the surface of a first article and/or to the surface of a second substrate;
d) adhesively contacting the surface of the first article to the surface of the second substrate via the curable adhesive composition; and
e) allowing the curable adhesive composition to cure.

The method of the present disclosure is particularly suitable for adhesively bonding parts that are typically used in manufacturing and repairing operations in construction, automotive, aeronautics or aerospace industries, in particular where safety requirements call for flame-retardant and so-called flame-smoke-toxic properties. Thus, both first and second substrates may be substrates commonly used in construction, automotive, transportation, aeronautics or aerospace industries. Substrates may comprise metallic, non-metallic and composite materials. Non-metallic materials are preferably selected from thermoplastic materials such as acrylonitrile butadiene styrene, polyetherimide, polyamide, and any combinations and mixtures thereof. That is, bonding a metallic substrate to a metallic substrate and bonding a non-metallic substrate to a non-metallic substrate is comprised within the present method, but also bonding a metallic substrate to a non-metallic surface or bonding a non-metallic substrate to a metallic substrate is also comprised within the method described herein. Bonding metallic to composite materials, or composite to composite, or thermoplastic to composite materials,or thermoplastic to thermoplastic may be particularly useful in the automotive, transportation, aeronautics and aerospace industry, in particular with regard to the manufacturing of the interior of vehicles such as cars, trains, aircrafts, helicopters, ships and spacecrafts. Due to the superior flame-smoke-toxic-properties of the adhesive precursor composition as described herein, said adhesive precursors are excellently suitable for use in the manufacture of interior of vehicles, ships, aircraft and spacecraft such as panels or furniture.

The present disclosure further provides a use of the curable adhesive precursor or the adhesive composition as described herein for adhesively connecting surfaces of parts in the manufacture of vehicles. Preferably, the use relates to the manufacture of cars, trains, aircrafts, helicopters, ships and spacecrafts.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### EXAMPLES

### Materials used:

AEROSIL R202 (Evonik Industries): hydrophobic fumed silica
ANCAMINE K54 (Air Products and Chemicals): Tris-2,4,6-dimethyl amino methylphenol.
Calcium nitrate tetrahydrate (VWR International GmbH): Ca(NO₃)₂.4H₂O
ARALDITE PY 322 (Huntsman) modified Bisphenol A resin (EEW 310-390 g/eq ; viscosity 0.7-1.4 Pas)
EPON 828 (Hexion Specialty Chemicals GmbH): difunctional bisphenol A/epichlorohydrin derived liquid epoxy resin (EEW 185-192 g/eq ; viscosity 110-150 Pas)
EPONEX 1510 (Hexion Specialty Chemicals GmbH): cycloaliphatic epoxy resin (EEW210-220 g/eq ; viscosity 1.8-2.5 Pas)
EXOLIT OP 1230 (Clariant): flame retardant (white, fine-grained powder based on an organic phosphinate)
EXOLIT RP 6500 (Clariant): flame retardant (stabilised, micro encapsulated red phosphorus in an epoxy resin carrier with 50 wt.-% solids content)
EXPAND C: expandable graphite (expand c 8099 LTE) (available from Lineta, Denmark) DEN 431 : Novolac resin (Dow Corning Co)
TACTIX 742: trifunctional epoxy resin (Huntsman)
HYCAR ATBN 1300X21 (Emerald Materials): Butadiene-acrylonitrile copolymer
KANE ACE MX257 (Kaneka): core-shell polymer (37%) dispersed in epoxy resin (diglycidylether of bisphenol A)
TTD (BASF): trioxatridecane diamine
Dynasilan Glyeo (Evonik): epoxysilane

### Test Methods

### 1. Cohesive strength (Overlap shear strength (OLS))

Overlap shear strength was determined according to European Standard EN 2243-1 (issue 04-2007).

Lap shear specimens were made using 2024-T3 etched aluminum panels. The adhesive was applied to one edge of each of the two panels (i.e., adherents) using a scraper. Bond area was 12,5 mm x 25 mm per sample. Spacers were used to control the thickness of the adhesive layer. Glass beads (125-150 µm in diameter) within the adhesive served as spacers. The bond was closed and the samples were cured for 4h at room temperature (23 +/- 2 °C) under the press (110 kPa) followed by 2h @ 65 °C.

The bonds were tested to failure at room temperature (23 +/- 2 °C) or at elevated temperature (85+/- 2 °C) using a crosshead displacement rate of 10 mm/min. The failure load was recorded, and the lap width was measured with a vernier caliper. The quoted lap shear strengths were calculated as failure load / (measured width of the bond x measured length of the bond). The average and standard deviation were calculated from the results. The overlap shear strength (OLS) values are recorded in Mega Pascal (MPa) and are an average of the results obtained with 3 samples.

### 2. Vertical flammability test

The flame retardancy (FR) was tested in a vertical configuration accordingly to FAR-25, Appendix F, Part 1 (a) (1) (ii) [Version 01-2012] for 12 seconds. The tested material must be self-extinguishing. The average burn length may not exceed 6 inches and the average flame time after removal of the flame source may not exceed 15 seconds. Drippings from the test specimen may not continue to flame for more than an average of 3 seconds after falling.

Two different sample setups were used:
1) adhesive layer of 125 µm ± 25 µm on 25µm thick aluminum substrate, sample width should be at least 75 ± 1 mm, sample length 305 ± 5 mm
2) Samples as defined in the FAA policy statement PS-ANM-25.853-01 (date 7-3-2013), Attachment 2, Item 23, Option #1, sample size 0.25" x 3" x 12"
In all cases the samples were cured for 5 days at room temperature (23 +/- 2 °C)

### 3. Peel strength

The peel strength was measured according to European Standard EN2243-2 (10-2006), the samples were made with a cure cycle of 4h at room temperature RT under the press (110 kPa) followed by 2h @ 65 °C. The bonds were tested to failure at room temperature (23 +/- 2 °C) using a Zwick Tensile Tester Z 100 with a crosshead displacement rate of 140 mm/min. The peel adhesion values are recorded in N/25mm and are the result of 3 measurements.

### Preparation of Part A and Part B

Parts A (A1 to A3) of the curable adhesive precursor compositions were prepared by combining the ingredients as listed in table 1 using a high speed mixer (DAC 150 FVZ Speedmixer, from Hauschild Engineering) with stirring at 3000 rpm. In a first step the liquid components for part A were mixed together for 2 min. Solid parts were added one after the other with mixing for 1 minute at 3000 rpm after each addition. The complete mixtures were again stirred for at least 2 min at 3000 rpm in the high speed mixer to ensure complete dispersion of all ingredients. After all raw materials were added the mixtures were (optionally) degassed and then filled into one of the two units of a dual pack cartridge.

**Table 1 composition of part A (amounts in % by weight)**

| Ingredient | A1 | A2 | A3 |
|---|---|---|---|
| TTD/EPON 828 adduct* | 61.0 | 81.0 | 76.5 |
| ANCAMINE K54 | 10.0 | 10.8 | 10.2 |
| Calcium nitrate tetrahydrate | 8.0 | 8.2 | 10.8 |
| HYCAR 1300x21 | 20.0 | / | 2.5 |
| Aerosil R202 | 1.0 | / | / |

| | | | |
|---|---|---|---|
| *TTD/EPON 828 adduct = trioxatridecane diamine adducted with EPON 828 in ratio of 58 g TTD and 18.5 g EPON 828 (calculated AEW: 79 gmole amine equivalent). | | | |

Parts B (B1 to B6) of the curable adhesive precursor composition were prepared according to the same procedure as outlined for Parts A, but using the ingredients as listed in table 2. After all raw materials were added the mixtures were (optionally) degassed and then filled into the other unit of a dual pack cartridge.

**Table 2 Composition of Part B (amounts in % by weight)**

| Compound | B1 | B2 | B3 | B4 | B5 | B6 |
|---|---|---|---|---|---|---|
| EPON 828 | 46.5 | 46.7 | 38.1 | 31.3 | 56.4 | 15.6 |
| EPONEX 1510 | 9.8 | / | / | / | / | / |
| ARALDITE PY322 | / | 9.8 | 11.3 | 9.8 | / | 9.8 |
| DEN 431 | / | / | / | 11.7 | / | / |
| TACTIX 742 | / | / | / | 8.4 | / | / |
| KANE ACE MX257 (37 % Core Shell) | 13.7 | 13.7 | 11.3 | 9.8 | 13.7 | 9.8 |
| Glyeo | 0.8 | 0.8 | / | 0.8 | 0.8 | / |
| EXOLITE OP1230 | 27.3 | 27.2 | / | 28.1 | 27.2 | / |
| EXOLITE 6500 (50 % solids) | / | / | 22.6 | / | / | 39.1 |
| Expand C | / | / | 14.9 | / | / | 25.8 |
| AEROSIL R202 | 1.8 | 1.8 | 1.8 | / | 1.8 | / |

### Preparation of curable adhesive precursors comprising Part A and Part B

A 200 ml dual pack cartridge obtained from Sulzer Mixpac, AG, Rotkreuz, Switzerland, was manually filled with Part A and part B in a 1:2 ratio (by volume). A mixing nozzle, type "F 10-18" (for 200ml), was fitted to the cartridge. After a dwell time of 12-24 hours, the curable adhesive precursor was extruded from the cartridge by using a pneumatic dispensing gun at a pressure of 4 bar (400 kiloPascals). Curing of the adhesive precursor was done as specified in the test methods above.

### Examples Ex-1 to Ex-4 and Comparative Examples C-1 and C-2

In examples Ex-1 to Ex-4, curable precursor compositions according to the invention were prepared from Parts A1 to A3, comprising a polyether amine, a second epoxy curing agent or a secondary curative, calcium nitrate catalyst and optionally a toughening agent and parts B1 to B4 comprising a first and a second epoxy resin, a phosphorous-based first flame retardant and an optional second flame retardant, a core-shell toughening agent and optional fillers. Comparative example C-1 was prepared from part A2 and part B5, that did not comprise a second epoxy resin distinct from the first epoxy resin. Comparative example C-2 was prepared from part A3 and part B6, comprising a high amount of non-halogeneous flame retardant. Extrusion, curing and examination of the samples were done according to the general procedures given above. All examples and the comparative example passed the vertical flammability tests in both configurations indicated above. The other test results are shown in table 3.

**Table 3: Properties of cured epoxy adhesives**

| Table | Ex 1 (A1/B1) | Ex 2 (A2/B2) | Ex 3 (A3/B3) | Ex 4 (A2/B4) | C-1 (A2/B5) | C-2 (A3/B6) |
|---|---|---|---|---|---|---|
| OLS @ RT [Mpa] | 20.3 | 19.1 | 20.5 | 21.8 | 17.5 | 13.5 |
| OLS @ 85 [Mpa] | 5.3 | 4.5 | 3.0 | 2.9 | 2.8 | 1.7 |
| Peel [N/25mm] | 100 | 92.2 | 110 | 60 | NA | 47.6 |
| Color | White | Off white | Brown | White | white | Brown |
| FR content (% by weight based on total weight) | 18.2 | 18.1 | 17.5 | 18.7 | 18.1 | 30 |

## Claims

1. A curable adhesive precursor, comprising
(a) a first part (A) comprising:
(i) a first epoxy curing agent comprising at least one polyether amine and having an amine equivalent weight of at least 55 grams per mole of amine equivalents;
(ii) a second epoxy curing agent distinct from the first epoxy curing agent or a secondary curative;
(iii) a metal salt catalyst; and
(iv) optionally, a toughening agent;
(b) a second part (B) comprising:
(i) a first epoxy resin in an amount in the range of from 30 to 55 wt.-%, based on the total weight of part (B);
(ii) a second epoxy-based resin distinct from the first epoxy resin in an amount in the range of from 4 to 40 wt.-%, based on the total weight of part (B);
(iii) at least one phosphorous-based first flame retardant in an amount in the range of from 15 to 30 wt.-%, based on the total weight of part (B);
(iv) optionally, at least one second flame-retardant distinct from the at least one first flame retardant in an amount in the range of from 5 to 17 wt.-%, based on the total weight of part (B);
(v) a core-shell polymer toughening agent;
(vi) optionally, an epoxy-based reactive diluent; and
(vii) optionally, a filler material;
wherein the total amount of flame retardant is lower than 25 wt.-% of the total curable adhesive precursor.

2. The curable adhesive precursor according to claim 1, wherein the phosphorous-based flame retardant is selected from a red phosphorous containing compound, preferably red phosphorous powder, and organophosphorous compounds.

3. The curable adhesive precursor according to claim 1 or claim 2, wherein the phosphorous flame-retardant is an organophosphorous compound, preferably selected from organophosphates, organophosphonates, and phosphinates.

4. The curable adhesive precursor according to any one of the preceding claims, wherein the total amount of flame retardant is lower than 22 wt.-%, preferably lower than 20 wt.-%, of the total weight of the curable adhesive precursor.

5. The curable adhesive precursor according to any one of the preceding claims, wherein the at least one second epoxy resin is selected from epoxy resins having a viscosity according to ASTM D 445 of less than 20 Pa·s, multifunctional epoxy resins and novolac epoxy resins.

6. The curable adhesive precursor according to any one of the preceding claims, wherein the metal in the metal salt catalyst is selected from the group consisting of alkali, earth alkali, rare earth metals, aluminium, preferably from alkali and earth alkali, more preferably from earth alkali, even more preferably from calcium, caesium, strontium, and magnesium.

7. The curable adhesive precursor according to any one of the preceding claims, wherein the epoxy-based reactive diluent (vi) is contained in an amount in the range of from 1 and 25 wt.-%, preferably in the range of from 4 to 20 wt.-%, more preferably in the range of from 6 to 20 wt.-% based on the total weight of part (B) of the curable adhesive precursor.

8. The curable adhesive precursor according to any one of the preceding claims, wherein the core-shell polymer toughening agent is contained in part (B) in an amount in the range of from 1 to 15 wt.-%, preferably in the range of from 2 to 10 wt.-% based on the total weight of part (B) of the curable adhesive precursor.

9. The curable adhesive precursor according to any one of the preceding claims, wherein the core-shell polymer toughening agent (iv) comprises core-shell polymer particles, preferably polybutadiene core shell particles, and an epoxy resin.

10. The curable adhesive precursor according to any one of the preceding claims, wherein the at least one second flame retardant comprises non-phosphorous material, preferably selected from a carbon-containing expandable material, organohalogens, metal hydroxides (preferably aluminium hydroxide and magnesium hydroxide), huntite, hydromagnesite and borates.

11. The curable adhesive precursor according to claim 10, wherein the second flame retardant is an expandable carbon-containing material, preferably an expandable carbonic material, and the first flame retardant is red phosphorous.

12. A curable adhesive composition, obtained from combining parts (A) and (B) of the curable adhesive precursor according to any one of the preceding claims.

13. The curable adhesive composition according to claim 11 or claim 12, which provides after curing an overlap shear strength at 85 °C according to EN 2243-1 of at least 1 MPa, preferably of at least 2 MPa, more preferably of at least 3 MPa.

14. A method of bonding a surface of a first substrate to a surface of a second substrate, the method comprising the following steps:
(a) Providing a curable adhesive precursor according to any one of claims 1 to 11,
(b) Combining parts (A) and (B) of the curable adhesive precursor so as to form a curable adhesive composition;
(c) Applying the curable adhesive composition to at least part of the surface of said first substrate and/or the at least part of the surface of said second substrate;
(d) Adhesively contacting the at least part of said surface of said first substrate to the at least part of the surface of said second substrate via the curable adhesive composition; and
(e) Allowing the curable adhesive composition to cure.

15. Use of the adhesive precursor composition according to any one of claims 1 to 11 or of the adhesive composition according to claim 12 or claim 13 for adhesively connecting surfaces of parts in the manufacture of vehicles, preferably in the manufacture of cars, vehicles for commercial transportation, ships, aircrafts, helicopters and spacecraft.

## Patentansprüche

1. Ein härtbarer Klebstoffvorläufer, umfassend
(a) einen ersten Teil (A), umfassend:
(i) ein erstes Epoxidhärtungsmittel, das mindestens ein Polyetheramin umfasst und ein Aminäquivalentgewicht von mindestens 55 Gramm pro Mol Aminäquivalente aufweist;
(ii) ein zweites Epoxidhärtungsmittel, das sich von dem ersten Epoxidhärtungsmittel unterscheidet, oder ein sekundäres Härtungsmittel;
(iii) einen Metallsalzkatalysator; und
(iv) wahlweise einen Schlagzähigkeitsverbesserer;
(b) einen zweiten Teil (B), umfassend:
(i) ein erstes Epoxidharz in einer Menge im Bereich von 30 bis 55 Gew.-%, bezogen auf das Gesamtgewicht von Teil (B);
(ii) ein zweites epoxidbasiertes Harz, das sich von dem ersten Epoxidharz unterscheidet, in einer Menge im Bereich von 4 bis 40 Gew.-%, bezogen auf das Gesamtgewicht von Teil (B);
(iii) mindestens ein phosphorbasiertes erstes Flammschutzmittel in einer Menge im Bereich von 15 bis 30 Gew.-%, bezogen auf das Gesamtgewicht von Teil (B);
(iv) wahlweise mindestens ein zweites Flammschutzmittel, das sich von dem mindestens einen ersten Flammschutzmittel unterscheidet, in einer Menge im Bereich von 5 bis 17 Gew.-%, bezogen auf das Gesamtgewicht von Teil (B);
(v) einen Kern-Hülle-Polymer-Schlagzähigkeitsverbesserer;
(vi) wahlweise ein epoxidbasiertes reaktives Verdünnungsmittel; und
(vii) wahlweise ein Füllmaterial;
wobei die Gesamtmenge an Flammschutzmittel weniger als 25 Gew.-% des gesamten härtbaren Klebstoffvorläufers beträgt.

2. Der härtbare Klebstoffvorläufer nach Anspruch 1, wobei das Flammschutzmittel auf Phosphorbasis aus einer roten Phosphor enthaltenden Verbindung, vorzugsweise Pulver von rotem Phosphor und organischen Phosphorverbindungen ausgewählt ist.

3. Der härtbare Klebstoffvorläufer nach Anspruch 1 oder Anspruch 2, wobei das Phosphor-Flammschutzmittel eine organische Phosphorverbindung ist, die vorzugsweise aus Organophosphaten, Organophosphonaten und Phosphinaten ausgewählt ist.

4. Der härtbare Klebstoffvorläufer nach einem der vorstehenden Ansprüche, wobei die Gesamtmenge an Flammschutzmittel weniger als 22 Gew.-%, vorzugsweise weniger als 20 Gew.-%, bezogen auf das Gesamtgewicht des härtbaren Klebstoffvorläufers, beträgt.

5. Der härtbare Klebstoffvorläufer nach einem der vorstehenden Ansprüche, wobei das mindestens eine zweite Epoxidharz aus Epoxidharzen mit einer Viskosität gemäß ASTM D 445 von weniger als 20 Pa·s, multifunktionellen Epoxidharzen und Novolac-Epoxidharzen ausgewählt ist.

6. Der härtbare Klebstoffvorläufer nach einem der vorstehenden Ansprüche, wobei das Metall in dem Metallsalzkatalysator ausgewählt ist aus der Gruppe bestehend aus Alkalimetallen, Erdalkalimetallen, Seltenerdmetallen, Aluminium, vorzugsweise aus Alkali und Erdalkali, mehr bevorzugt aus Erdalkali, noch mehr bevorzugt aus Calcium, Cäsium, Strontium und Magnesium.

7. Der härtbare Klebstoffvorläufer nach einem der vorstehenden Ansprüche, wobei das epoxidbasierte reaktive Verdünnungsmittel (vi) in einer Menge im Bereich von 1 und 25 Gew.-%, vorzugsweise im Bereich von 4 bis 20 Gew.-%, mehr bevorzugt im Bereich von 6 bis 20 Gew.-%, bezogen auf das Gesamtgewicht von Teil (B) des härtbaren Klebstoffvorläufers, enthalten ist.

8. Der härtbare Klebstoffvorläufer nach einem der vorstehenden Ansprüche, wobei der Kern-Hülle-Polymer-Schlagzähigkeitsverbesserer in Teil (B) in einer Menge im Bereich von 1 bis 15 Gew.-%, vorzugsweise im Bereich von 2 bis 10 Gew.-%, bezogen auf das Gesamtgewicht von Teil (B) des härtbaren Klebstoffvorläufers, enthalten ist.

9. Der härtbare Klebstoffvorläufer nach einem der vorstehenden Ansprüche, wobei der Kern-Schale-Polymerelastifikator (iv) Kern-Schale-Polymerteilchen, vorzugsweise Polybutadien-Kern-Schale-Teilchen, und ein Epoxidharz umfasst.

10. Der härtbare Klebstoffvorläufer nach einem der vorstehenden Ansprüche, wobei das mindestens eine zweite Flammschutzmittel phosphorfreies Material umfasst, das vorzugsweise ausgewählt ist aus einem kohlenstoffhaltigen expandierbaren Material, Organohalogenen, Metallhydroxiden (vorzugsweise Aluminiumhydroxid und Magnesiumhydroxid), Huntit, Hydromagnesit und Boraten.

11. Härtbarer Klebstoffvorläufer nach Anspruch 10, wobei das zweite Flammschutzmittel ein expandierbares kohlenstoffhaltiges Material ist, vorzugsweise ein expandierbares Kohlematerial, und das erste Flammschutzmittel roter Phosphor ist.

12. Eine härtbare Klebstoffzusammensetzung, erhalten durch Kombinieren von Teil (A) und (B) des härtbaren Klebstoffvorläufers nach einem der vorstehenden Ansprüche.

13. Die härtbare Klebstoffzusammensetzung nach Anspruch 11 oder Anspruch 12, die nach dem Aushärten eine Überlappungsscherfestigkeit bei 85 °C gemäß EN 2243-1 von mindestens 1 MPa, vorzugsweise von mindestens 2 MPa, mehr bevorzugt von mindestens 3 MPa, bereitstellt.

14. Ein Verfahren zum Verbinden einer Oberfläche eines ersten Substrats mit einer Oberfläche eines zweiten Substrats, wobei das Verfahren folgende Schritte umfasst:
(a) Bereitstellen eines härtbaren Klebstoffvorläufers nach einem der Ansprüche 1 bis 11,
(b) Kombinieren von Teil (A) und (B) des härtbaren Klebstoffvorläufers, um eine härtbare Klebstoffzusammensetzung zu bilden;
(c) Aufbringen der härtbaren Klebstoffzusammensetzung auf mindestens einen Teil der Oberfläche des ersten Substrats und/oder den mindestens einen Teil der Oberfläche des zweiten Substrats;
(d) Verkleben des mindestens einen Teils der Oberfläche des ersten Substrats mit dem mindestens einen Teil der Oberfläche des zweiten Substrats über die härtbare Klebstoffzusammensetzung; und
(e) Aushärtenlassen der härtbaren Klebstoffzusammensetzung.

15. Verwendung der Klebstoffvorläuferzusammensetzung nach einem der Ansprüche 1 bis 11 oder der Klebstoffzusammensetzung nach Anspruch 12 oder Anspruch 13 zum Verkleben von Oberflächen von Teilen bei der Herstellung von Fahrzeugen, vorzugsweise bei der Herstellung von Autos, Fahrzeugen für gewerblichen Transport, Schiffen, Flugzeugen, Helikoptern und Raumfahrzeugen.

## Revendications

1. Précurseur d'adhésif durcissable comprenant
(a) une première partie (A) comprenant :
(i) un premier agent de durcissement d'époxy comprenant au moins une polyéther-amine et ayant un poids équivalent d'amine d'au moins 55 grammes par mole d'équivalents aminé ;
(ii) un deuxième agent de durcissement d'époxy distinct du premier agent de durcissement d'époxy ou un durcisseur secondaire ;
(iii) un catalyseur à sel métallique ; et
(iv) facultativement, un agent de ténacité ;
(b) une deuxième partie (B) comprenant :
(i) une première résine époxy en une quantité dans la plage allant de 30 à 55 % en poids, sur la base du poids total de partie (B) ;
(ii) une deuxième résine à base d'époxy distincte de la première résine époxy en une quantité dans la plage allant de 4 à 40 % en poids, sur la base du poids total de partie (B) ;
(iii) au moins un premier ignifugeant à base de phosphore en une quantité dans la plage allant de 15 à 30 % en poids, sur la base du poids total de partie (B) ;
(iv) facultativement, au moins un deuxième ignifugeant distinct de l'au moins un premier ignifugeant en une quantité dans la plage allant de 5 à 17 % en poids, sur la base du poids total de partie (B) ;
(v) un agent de ténacité polymère à noyau-enveloppe ;
(vi) facultativement, un diluant réactif à base d'époxy ; et
(vii) facultativement, un matériau de charge ;
dans lequel la quantité totale d'ignifugeant est inférieure à 25 % en poids du précurseur d'adhésif durcissable total.

2. Précurseur d'adhésif durcissable selon la revendication 1, dans lequel l'ignifugeant à base de phosphore est choisi parmi un composé contenant du phosphore rouge, de préférence de la poudre de phosphore rouge, et des composés organophosphoreux.

3. Précurseur d'adhésif durcissable selon la revendication 1 ou la revendication 2, dans lequel l'ignifugeant phosphoreux est un composé organophosphoreux, choisi de préférence parmi organophosphates, organophosphonates, et phosphinates.

4. Précurseur d'adhésif durcissable selon l'une quelconque des revendications précédentes, dans lequel la quantité totale d'ignifugeant est inférieure à 22 % en poids, de préférence inférieure à 20 % en poids, du poids total du précurseur d'adhésif durcissable.

5. Précurseur d'adhésif durcissable selon l'une quelconque des revendications précédentes, dans lequel l'au moins une deuxième résine époxy est choisie parmi des résines époxy ayant une viscosité selon ASTM D 445 inférieure à 20 Pa s, des résines époxy multifonctionnelles et des résines époxy novolac.

6. Précurseur d'adhésif durcissable selon l'une quelconque des revendications précédentes, dans lequel le métal dans le catalyseur à sel métallique est choisi dans le groupe constitué d'alcalin, alcalino-terreux, métaux des terres rares, aluminium, de préférence d'alcalin et d'alcalino-terreux, plus préférablement d'alcalino-terreux, même plus préférablement de calcium, césium, strontium, et magnésium.

7. Précurseur d'adhésif durcissable selon l'une quelconque des revendications précédentes, dans lequel le diluant réactif à base d'époxy (vi) est contenu en une quantité dans la plage allant de 1 à 25 % en poids, de préférence dans la plage allant de 4 à 20 % en poids, plus préférablement dans la plage allant de 6 à 20 % en poids sur la base du poids total de partie (B) du précurseur d'adhésif durcissable.

8. Précurseur d'adhésif durcissable selon l'une quelconque des revendications précédentes, dans lequel l'agent de ténacité polymère à noyau-enveloppe est contenu dans la partie (B) en une quantité dans la plage allant de 1 à 15 % en poids, de préférence dans la plage allant de 2 à 10 % en poids sur la base du poids total de partie (B) du précurseur d'adhésif durcissable.

9. Précurseur d'adhésif durcissable selon l'une quelconque des revendications précédentes, dans lequel l'agent de ténacité polymère à noyau-enveloppe (iv) comprend des particules polymères à noyau-enveloppe, de préférence des particules à noyau-enveloppe de polybutadiène, et une résine époxy.

10. Précurseur d'adhésif durcissable selon l'une quelconque des revendications précédentes, dans lequel l'au moins un deuxième ignifugeant comprend un matériau non phosphoreux, choisi de préférence parmi un matériau extensible contenant du carbone, des composés organohalogénés, des hydroxydes métalliques (de préférence hydroxyde d'aluminium et hydroxyde de magnésium), de la huntite, de l'hydromagnésite et des borates.

11. Précurseur d'adhésif durcissable selon la revendication 10, dans lequel le deuxième ignifugeant est un matériau expansible contenant du carbone, de préférence un matériau carbonique expansible, et le premier ignifugeant est du phosphore rouge.

12. Composition adhésive durcissable, obtenue en combinant les parties (A) et (B) du précurseur d'adhésif durcissable selon l'une quelconque des revendications précédentes.

13. Composition adhésive durcissable selon la revendication 11 ou la revendication 12, qui fournit après durcissement une résistance au cisaillement en chevauchement à 85 °C selon EN 2243-1 d'au moins 1 MPa, de préférence d'au moins 2 MPa, plus préférablement d'au moins 3 MPa.

14. Procédé de liaison d'une surface d'un premier substrat à une surface d'un deuxième substrat, le procédé comprenant les étapes suivantes :
(a) fournir un précurseur d'adhésif durcissable selon l'une quelconque des revendications 1 à 11,
(b) combiner les parties (A) et (B) du précurseur d'adhésif durcissable de façon à former une composition adhésive durcissable ;
(c) appliquer la composition adhésive durcissable à au moins une partie de la surface dudit premier substrat et/ou à l'au moins une partie de la surface dudit deuxième substrat ;
(d) mettre en contact par adhérence l'au moins une partie de ladite surface dudit premier substrat à l'au moins une partie de la surface dudit deuxième substrat par l'intermédiaire de la composition adhésive durcissable ; et
(e) laisser durcir la composition adhésive durcissable.

15. Utilisation de la composition de précurseur d'adhésif selon l'une quelconque des revendications 1 à 11 ou de la composition adhésive selon la revendication 12 ou la revendication 13 pour connecter par adhérence des surfaces de parties dans la fabrication de véhicules, de préférence dans la fabrication de voitures, de véhicules pour le transport commercial, de navires, d'aéronefs, d'hélicoptères et d'engin spatial.
